(19) Europäisches Patentamt / European Patent Office / Office européen des brevets

(11) **EP 2 942 156 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(51) Int Cl.:
***B25B 29/02*** *(2006.01)*

(21) Anmeldenummer: **15161054.0**

(22) Anmeldetag: **26.03.2015**

(54) **SPANNVORRICHTUNG ZUM DEHNEN EINES GEWINDEBOLZENS**

CLAMPING DEVICE FOR STRETCHING A THREADED BOLT

DISPOSITIF DE SERRAGE POUR L'ÉTIREMENT D'UN BOULON FILETÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2014 DE 102014106215**

(43) Veröffentlichungstag der Anmeldung:
**11.11.2015 Patentblatt 2015/46**

(73) Patentinhaber:
• **Hohmann, Jörg**
  **59872 Meschede (DE)**
• **Hohmann, Frank**
  **59581 Warstein (DE)**

(72) Erfinder:
• **Die Erfinder haben auf ihr Recht verzichtet, als solche bekannt gemacht zu werden.**

(74) Vertreter: **Bungartz Christophersen Partnerschaft mbB Patentanwälte Homberger Strasse 5 40474 Düsseldorf (DE)**

(56) Entgegenhaltungen:
**WO-A1-2013/117807 WO-A1-2014/122356**

**Beschreibung**

Die Erfindung betrifft eine Spannvorrichtung zum Dehnen eines Gewindebolzens durch Zug an dessen Gewindeendabschnitt nach dem Oberbegriff des Patentanspruchs 1.

Eine hydraulisch arbeitende Gewindebolzen-Spannvorrichtung mit diesen Merkmalen ist aus der WO 2013/117807 A1 bekannt. Sie dient dem Anziehen hochbelasteter Schraubenverbindungen oder Gewindebolzen. Unter Einsatz hydraulischen Drucks lässt sich vorübergehend eine hohe Zugkraft auf den Gewindebolzen aufbringen, um währenddessen die auf dem Gewindebolzen sitzende Mutter torsionsfrei anzuziehen bzw. nachzuziehen. Zu diesem Zweck ist eine Wechselbuchse auf den über die Mutter hinaus vorstehenden Gewindeabschnitt des Gewindebolzens aufgeschraubt. Die Wechselbuchse steht axial mit einem hydraulisch angetriebenen Kolben in Verbindung. Bei Einleiten von hydraulischem Druck hebt sich der Kolben und nimmt die Wechselbuchse mit, wodurch der Gewindebolzen etwas in Längsrichtung gezogen und dabei auch gedehnt wird. Um beim Spannprozess zu Aussagen über die Bewegung der Wechselbuchse und damit des in die Wechselbuchse eingeschraubten Bolzenendes zu gelangen, ist die Wechselbuchse im Bereich ihres Gewindeeingriffs in den Gewindebolzen mit einem Magnetstreifen versehen. Auf etwa gleicher Höhe ist in dem Zylindergehäuse der Spannvorrichtung ein elektrischer Sensor angeordnet, mit dem sich die Längsbewegung des Magnetstreifens messen lässt.

Mit der bekannten Spannvorrichtung lassen sich in den meisten Fällen gute Messergebnisse erzielen. Allerdings kann es zu verfälschten Ergebnissen in Situationen kommen, in denen an dem Zylindergehäuse leichte Drehmomente wirken. Dies ist typischerweise dann der Fall, wenn die Vorrichtung nicht für senkrechte Verschraubungen, sondern unter einer Neigung oder sogar in horizontaler Spannrichtung eingesetzt wird. Denn Asymmetrien am Gehäuse oder der Peripherie, etwa die einseitig an dem Zylindergehäuse angeschlossene Hydraulikversorgung, können dazu führen, dass sich das Zylindergehäuse mit Nachlassen des Hydraulikdrucks etwas um die Spannachse dreht, und es dabei auch zu einem leichten Verdrehen der auf dem Bolzenende aufgeschraubten Wechselbuchse kommt. Diese bzw. der daran befestigte Magnetstreifen kann dem Sensor dann keine zuverlässigen Positionswerte mehr liefern.

Daher ist es die Aufgabe der Erfindung, auch in solchen besonderen Situationen zu zuverlässigen Messergebnissen zu kommen.

Zur Lösung wird eine Spannvorrichtung zum Dehnen eines Gewindebolzens durch Zug an dessen Gewindeendabschnitt mit den Merkmalen des Patentanspruchs 1 vorgeschlagen.

Diese Spannvorrichtung verwendet zwar, wie es aus dem Stand der Technik bekannt ist, eine aus zwei zusammenwirkenden Elementen bestehende Einrichtung zur Weg- und/oder Positionserfassung in Spannrichtung, allerdings befindet sich das eine dieser Elemente nicht an der Wechselbuchse, sondern direkt an dem Kolben. Durch Messen an dem Kolben und damit an dem dem hydraulischen Druck ausgesetzten Bauteil sind in bestimmten Situationen zuverlässigere Rückschlüsse auf die beim Spannprozess erzielte Bolzenverlängerung möglich, als durch eine Weg- oder Positionserfassung der Wechselbuchse, obwohl in der Theorie die Wechselbuchse, da sie das dem Gewindebolzen "nähere" Bauteil ist, die genaueren Ergebnisse liefern sollte. Dies gilt aber, siehe oben, nicht in allen Situationen.

Die beiden Elemente der Einrichtung zur Weg- und/oder Positionserfassung können, bezogen auf die Spannachse, einander radial gegenüberliegen.

Vorzugsweise ist das erste Element in Ringform um den Kolben herum an diesem angeordnet. Dies hat den Vorteil, dass bei der Montage der Spannvorrichtung nach dem Einsetzen des Kolbens die Drehlage des Kolbens ohne Bedeutung für das Funktionieren der Einrichtung zur Weg- und/oder Positionserfassung ist.

Beispielsweise handelt es sich bei dem ersten Element der Einrichtung um einen Magnetstreifen, oder um eine Anordnung aus mehreren in der Umfangsfläche des Kolbens ausgebildeten Rillen.

Das zweite Element ist vorzugsweise ein Sensor oder Empfänger. Dieser ist vorzugsweise in einer Öffnung oder Aussparung des Zylindergehäuses angeordnet, die sich nur über einen kleinen Teil des Gesamtumfangs des Zylindergehäuses erstreckt, um dessen Festigkeit nicht zu schwächen.

Weitere Einzelheiten und Vorteile ergeben sich aus der nachfolgenden Beschreibung von Ausführungsbeispielen, die auf den Zeichnungen wiedergegeben sind. Es zeigen:

Fig.1:   in einer vereinfachten Schnittdarstellung eine hydraulisch arbeitende Gewindebolzen-Spannvorrichtung, aufgesetzt auf einen Gewindebolzen und abgestützt auf einer Unterlage, wobei die Spannvorrichtung mit einem einstufigen Spannzylinder arbeitet;

Fig. 2:   eine andere Ausführungsform einer hydraulisch arbeitenden Gewindebolzen-Spannvorrichtung, wobei diese Spannvorrichtung mit einem zweistufigen Spannzylinder arbeitet.

Die hydraulisch betriebene Spannvorrichtung dient dem Anziehen und gegebenenfalls auch dem Lösen hochbelasteter Schraubenverbindungen. Mit der Spannvorrichtung lässt sich in Längsrichtung eines Gewindebolzens 3 für eine gewisse Zeit eine vorgegebene Zugkraft auf den Bolzen und damit eine Dehnung des Bolzens erreichen, um währenddessen die auf dem Gewindebolzen 3 aufgeschraubte und sich auf einer umgebenden Unterlage 8 abstützende Mutter 4 der Schraubverbindung anzuziehen bzw. nachzuziehen.

Eine innerhalb der Spannvorrichtung längsbeweglich angeordnete Wechselbuchse 10 wird auf den über die Mutter 4 hinaus vorstehenden Gewindeabschnitt A des Gewindebolzens 3 aufgeschraubt, und anschließend hydraulisch unter Zugkraft gesetzt, wodurch sich der Gewindebolzen 3 in Längsrichtung dehnt.

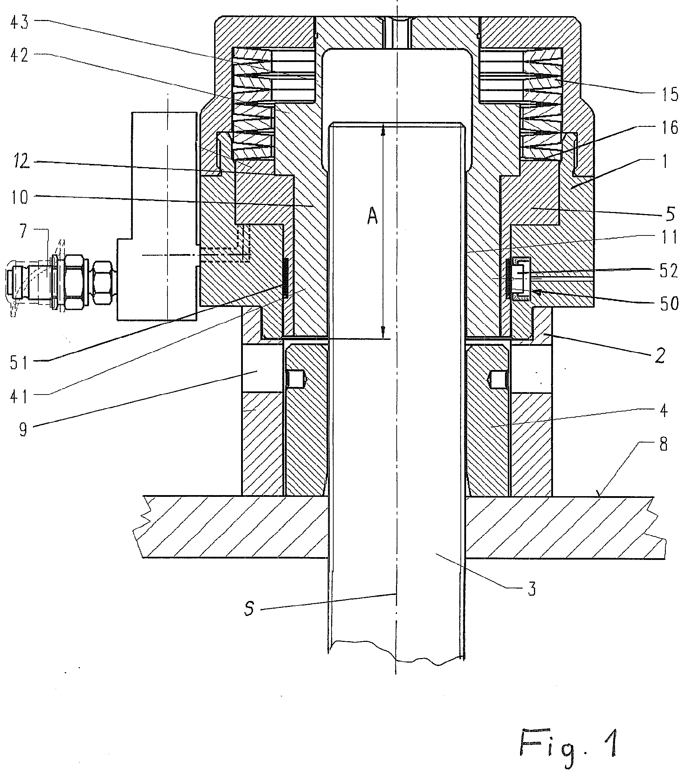

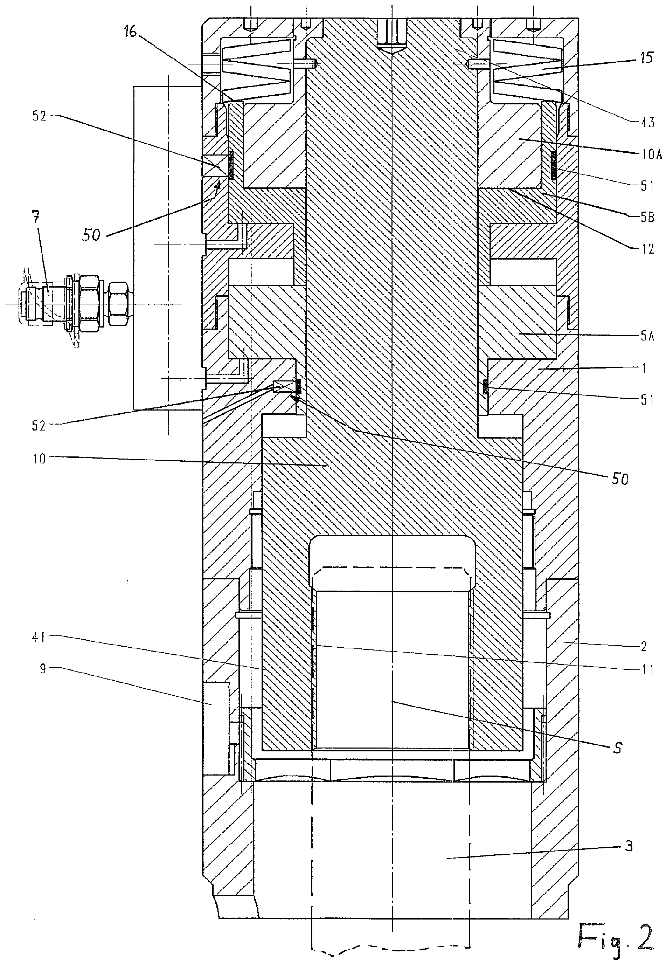

Umschlossen ist der Spannmechanismus von einem Zylindergehäuse 1. Dieses kann wie in Fig. 1 einstufig sein oder auch für höhere Spanndrücke, wie in Fig. 2 abgebildet, modulartig aus zwei oder mehr Zylinderabschnitten zusammengesetzt sein.

Die starre Fortsetzung des Zylindergehäuses 1 nach unten bildet ein auf der Unterlage 8 abgestütztes, die Mutter 4 umgebendes Stützrohr 2. Das Stützrohr 2 kann ein gegenüber dem Zylindergehäuse 1 separates, aber zu diesem starres Bauteil sein.

Das Stützrohr 2 ist an seiner Unterseite offen und stützt sich auf jener Unterlage 8 ab, zumeist einem Maschinenteil, auf der sich auch die Mutter 4 abstützt. Außerdem ist ein durch eine Öffnung 9 in dem Stützrohr 2 hindurch arbeitendes Getriebe vorhanden, mit dem sich die auf den Gewindebolzen 3 aufgeschraubte Mutter 4 von außen her drehen lässt. Dieses Drehen ist natürlich nur möglich, wenn die Spannvorrichtung arbeitet, und daher die Mutter 4 nicht durch erhebliche Reibung an der Unterlage 8 belastet ist.

Seitlich an dem Zylindergehäuse 1 befindet sich ein Hydraulikanschluss 7, über den der hydraulische Arbeitsraum der Spannvorrichtung ventilgesteuert mit einer externen Hydraulikversorgung verbunden ist, die hinsichtlich des Arbeitsdrucks und des hydraulischen Druckaufbaus steuerbar ist, vorzugsweise mittels einer elektronischen Steuer- und Regeleinheit.

Das Zylindergehäuse 1 umfasst auf der Spannachse S einen (Fig. 1) oder alternativ auch zwei oder mehrere (Fig. 2) Hydraulikzylinder, die über den Hydraulikanschluss 7 und eine flexible, druckfeste Hydraulikleitung mit der steuerbaren externen Hydraulikversorgung verbunden sind.

In jedem Hydraulikzylinder ist ein Kolben 5, 5A, 5B in Richtung der Spannachse S beweglich angeordnet. Während die Wechselbuchse 10 austauschbar ist und z. B. aus der Spannvorrichtung entfernt werden kann, verbleibt der Kolben 5, 5A, 5B stets in der Spannvorrichtung, da er Teil des hydraulischen Systems ist.

Wegen der hohen Drücke ist der Kolben 5, 5A, 5B sehr gut zu der Zylinderinnenwandung des Hydraulikzylinders hin abgedichtet. Die Qualität dieser Abdichtung hat zur Folge, dass der Kolben, obwohl er ebenso wie die Zylinderinnenwandung einen zylindrischen Querschnitt aufweist, nahezu drehfest gegenüber dem Zylindergehäuse 1 ist. In der Praxis kommt es, jedenfalls im Rahmen des einzelnen Spannprozesses, zu keinem nennenswerten Drehen des Kolbens um die Spannachse S. Hingegen ist die nicht abgedichtete Wechselbuchse 10 gegenüber dem Zylindergehäuse 1 und gegenüber dem Kolben 5, 5A, 5B drehbar.

Bei dem in Fig. 1 abgebildeten Ausführungsbeispiel ist nur eine Zylinderstufe und damit nur ein Kolben 5 vorhanden, bei dem in Fig. 2 gebildeten zweiten Ausführungsbeispiel sind zwei Zylinderstufen und damit auch zwei Kolben 5A, 5B vorhanden. Ebenfalls möglich ist ein mehrstufiger Spannzylinder mit drei oder mehr Kolben. Durch Einspeisen von hydraulischem Druck in den bzw. in die Arbeitsräume wird der hydraulische Kolben 5 bzw. werden die hydraulischen Kolben 5A, 5B angehoben.

Das Anheben erfolgt entgegen der Druckkraft einer Federanordnung 15. Die Federanordnung 15 besteht vorzugsweise aus einer oder mehreren Tellerfedern, die ringförmig um den Kolben 5 herum angeordnet sind, und sich von oben her auf dem Kolben 5 bzw. auf dem obersten Kolben 5B abstützen. Dazu ist an dem Kolben 5 bzw. 5B eine Federabstützung 16 ausgebildet. Die Federanordnung 15 ist daher bestrebt, den bzw. die Kolben in seiner Grundstellung zu halten, in der der hydraulische Arbeitsraum sein Minimum hat.

Der Kolben ist ringförmig und mit einer Stufe versehen, die eine der Unterlage 8 zugewandte Ringfläche bildet. Mit dieser Ringfläche stützt sich der Kolben 5 bzw. 5B von unten axial gegen eine ringförmige Fläche 12 ab, die unmittelbar an der Wechselbuchse 10 ausgebildet ist (Fig. 1), oder die an einem separaten Ring 10A ausgebildet ist, der mit der Wechselbuchse 10 verschraubt und drehfest daran gesichert ist (Fig. 2). Auf diese Weise ist die Wechselbuchse 10 durch den Kolben 5 bzw. 5B axial mitnehmbar ausgebildet. Zugleich ist die Wechselbuchse 10, soweit die Druckverhältnisse dies zulassen, relativ zu den Kolben 5, 5A, 5B frei drehbar ausgebildet.

Die Wechselbuchse 10 setzt sich, ausgehend von der Unterlage 8, aus einem ersten Längsabschnitt 41, einem zweiten Längsabschnitt 42 und einem dritten Längsabschnitt 43 zusammen. Sie ist infolge Material und Querschnittsgeometrie in Axialrichtung derart starr, dass sie, auch bei hohem hydraulischen Druck, keine ins Gewicht fallende Längsverformung zeigt.

Auf dem ersten Längsabschnitt 41 weist die Wechselbuchse 10 ein hoch belastbares Innengewinde 11 auf, welches durch Drehen der Wechselbuchse 10 auf den Gewindeabschnitt A des Gewindebolzens 3 aufschraubbar ist. Die axiale Länge des Innengewindes 11 und damit die zu Verfügung stehende Einschraubtiefe sollte mindestens gleich dem Gewindedurchmesser des Bolzens 2 sein.

Der zweite Längsabschnitt 42 der Wechselbuchse 10 ist bei der Ausführungsform nach Fig. 1 als ein einstückig angeformter Bund gestaltet, an dem die ringförmige Fläche 12 ausgebildet ist. Der Bund dient der axialen Abstützung der Wechselbuchse 10 an dem Kolben 5. Der zweite Längsabschnitt 42 bildet zugleich den im Radius größten Abschnitt der Wechselbuchse. Bei der Ausführungsform nach Fig. 2 bildet der aufschraubbare Ring 10A den zweiten Längsabschnitt der Wechselbuchse.

Der dritte Längsabschnitt 43 ist zapfenförmig und von geringerem Durchmesser als der zweite Längsabschnitt 42, so dass zum Drehen der Wechselbuchse 10 diese an dem dritten Längsabschnitt 43 von Hand greifbar ist.

Die Spannvorrichtung weist eine aus zwei zusammenwirkenden Elementen 51, 52 bestehende Einrichtung 50 auf, mit der eine exakte Weg- und/oder Positionserfassung des Kolbens 5 (Fig. 1) bzw. eines Kolbens 5A, 5B (Fig. 2) durchführbar ist.

Das erstes Element 51 der Einrichtung 50 ist hier ein an dem Kolben 5, 5A, 5B angebrachter, den Kolben ringförmig umgebender Magnetstreifen 51. Alternativ kann ein Längsabschnitt des Kolbens 5, 5A, 5B magnetisiert sein, und so längen- oder wegemäßig detektierbar sein. Alternativ kann das erste Element 51 eine sensierbare Anordnung aus mehreren Umfangsrillen sein, die in der Mantelfläche des Kolbens ausgebildet sind.

Das zweite Element 52 ist vorzugsweise ein Sensor zur Detektion der Längsposition des ersten Elements 51, der dem Kolben und damit dem ersten Element 51 zugewandt an dem Zylindergehäuse 1 befestigt ist.

Die Elemente 51, 52 liegen einander bezogen auf die Spannachse S des Zylindergehäuses 1 radial gegenüber, wobei das zweite Element 52 in einer Öffnung oder einer Aussparung des Zylindergehäuses 1 angeordnet ist, die sich nur über einen möglichst kleinen Teil des Umfangs des Zylindergehäuses 1 erstreckt, um dessen Festigkeit nicht zu schwächen.

Durch die beschriebene Anordnung des Magnetstreifens 51 und des Sensors 52 lassen sich zuverlässige Weg- und/oder Positionsmessungen auch in solchen Situationen durchführen, in denen an dem Zylindergehäuse 1 Drehmomente wirken. Dies ist typischerweise dann der Fall, wenn die Vorrichtung nicht für vertikale Verschraubungen, sondern unter einer Neigung oder sogar in horizontaler Spannrichtung eingesetzt wird. Denn Asymmetrien in der Gewichtsverteilung der Vorrichtung, insbesondere aber Zug- oder Gewichtskräfte aufgrund des nur einseitig an dem Zylindergehäuse 1 befestigten Hydraulikanschlusses 7 können dazu führen, dass sich mit Nachlassen des Hydraulikdrucks das Zylindergehäuse 1 etwas um die eigene Achse S dreht. Kommt es dabei zu einem leichten Verdrehen der auf den Gewindeabschnitt A aufgeschraubten Wechselbuchse 10, kann diese bzw. kann ein daran befestigter Magnetstreifen keine zuverlässigen Positionswerte mehr liefern.

Zum Entstehen dieser Situation trägt bei, dass der Kolben 5, 5A, 5B sehr gut zu der Zylinderinnenwandung des Hydraulikzylinders hin abgedichtet ist, wodurch sich der Kolben nahezu drehfest gegenüber dem Zylindergehäuse 1 verhält. Dreht sich das Zylindergehäuse 1 um die Spannachse S, so dreht sich der Kolben praktisch in demselben Maße mit. Es kommt, jedenfalls im Rahmen des einzelnen Spannprozesses, zu keinem Verdrehen des Kolbens relativ zum Gehäuse 1. Hingegen ist die nicht abgedichtete Wechselbuchse 10 gegenüber dem Gehäuse 1 und gegenüber dem Kolben drehbar

Um auch in den beschriebenen Situationen zu zuverlässigen Messergebnissen zu kommen, befindet sich das erste Element 51 der Einrichtung 50 zur Weg- und/oder Positionserfassung nicht an der Wechselbuchse 10, sondern direkt an dem Kolben 5, 5A, 5B. Dieser ist das dem hydraulischen Druck unmittelbar ausgesetzte Bauteil und erlaubt in der beschriebenen Situation zuverlässigere Rückschlüsse auf die beim Spannprozess erzielte Bolzenverlängerung, als es durch ein Messen an der Wechselbuchse möglich ist, obwohl in der Theorie die Wechselbuchse 10, da sie das dem Gewindebolzen 3 "nähere" Bauteil ist, die genaueren Ergebnisse liefern sollte.

Bei der Ausführungsform nach Fig. 2 kann, wie in Bezug auf den unteren Kolben 5A dargestellt, der Magnetstreifen 51 oder eine Anordnung aus mehreren Umfangsrillen entweder in Form eines umlaufenden Rings an diesem unteren Kolben befestigt sein, oder alternativ, wie Fig. 2 ebenfalls illustriert, an dem oberen Kolben 5B.

Der Sensor 52 ist signaltechnisch mit der elektronischen Steuer- und Regeleinheit verbunden, die die Spannvorrichtung hinsichtlich des Arbeitsdrucks und des hydraulischen Druckaufbaus steuert. Die Signalverbindung kann entweder über ein Kabel erfolgen, oder über eine Funkverbindung.

Im Rahmen des hier bevorzugten hydraulischen Spannverfahrens erfolgt die Längenmessung erst ab einem vorher zu definierenden Verspanndruck. Die durch den Sensor 52 erfasste Länge bzw. Längsposition des Magnetstreifens 51 wird in dem Prozessor der elektronischen Steuer- und Regeleinheit in eine Kraft umgerechnet, und hieraus die Kraft in dem Gewindebolzen 3 bestimmt, die nach dem Anlegen der Mutter 4 in dem Gewindebolzen 3 herrscht.

Dies wird im Folgenden an einem Beispiel erläutert. Beträgt der hydraulische Druck 0 bar, beträgt auch die mittels der Einrichtung 50 erfasste Längung 0 mm. Beträgt der Verspanndruck 50 bar, beträgt die so erfasste Längung 0,03 mm. Bei einem Enddruck von 1.351 bar (2.879 KN) beträgt die Längung 0,8 mm. Nach Erreichen dieses Enddrucks wird die Mutter 4 mittels des durch die Öffnung 9 in dem Stützrohr 2 arbeitenden Getriebe angelegt. Es folgt eine Druckentlastung auf 0 bar. Durch die Kolbenrückstellung, insbesondere durch den Einfluss der Federanordnung 15, fahren die Kolben 5 bzw. 5A, 5B in ihre Ausgangsstellung zurück, ohne sich zu drehen.

Sodann wird in einem weiteren Schritt der Druck erneut hochgefahren, z. B. bis zu einem Druck von 50 bar. Wird hierbei eine Längung von 0,68 mm errechnet, wird in der Steuer- und Regeleinheit folgende Berechnung durchgeführt:

effektive Längung : 0,68 mm - 0,03 mm = 0,65 mm

Kraftberechnung : F = 0,65/0,8 x 2897 KN = 2353 KN

Die berechnete Kraft kann auch unmittelbar an der Spannvorrichtung angezeigt werden. Hierzu kann oben am Zylindergehäuse 1 eine entsprechende optische Anzeige, die durch eine Batterie gespeist wird, angeordnet sein. Mit der beschriebenen Spannvorrichtung ist insbesondere auch eine automatische Pumpensteuerung der Hydraulikpumpe in Abhängigkeit von den sensierten und berechneten Werten möglich.

Die Erfassung der Länge bzw. der Position des Kolbens kann außer mittels der magnetischen Sensorik auch durch andere Arten der Längen- oder Positionserfassung erfolgen, z. B. durch über den Umfang des Kolbens angeordnete Rillen, die von einem am Zylindergehäuse 1 befestigten Sensor erfasst, und in der Steuereinheit in Längensignale umgewandelt werden.

**Bezugszeichenliste**

| 1 | Zylindergehäuse |
|---|---|
| 2 | Stützrohr |
| 3 | Gewindebolzen |
| 4 | Mutter |
| 5 | Kolben |
| 5A | Kolben |
| 5B | Kolben |
| 7 | Hydraulikanschluss |
| 8 | Unterlage |
| 9 | Öffnung |
| 10 | Wechselbuchse |
| 10A | Ring |
| 11 | Innengewinde |
| 12 | Stufe |
| 15 | Federanordnung |
| 16 | Federabstützung |
| 41 | erster Längsabschnitt |
| 42 | zweiter Längsabschnitt |
| 43 | dritter Längsabschnitt |
| 50 | Einrichtung zur Weg- und/oder Positionserfassung |
| 51 | erstes Element, Magnetstreifen |
| 52 | zweites Element, Sensor |
| A | Gewindeabschnitt |
| S | Spannachse |

**Patentansprüche**

**1.** Spannvorrichtung zum Dehnen eines Gewindebolzens durch Zug an dessen Gewindeendabschnitt (A), mit

- einem den Gewindebolzen umgebenden Stützrohr (2), welches gegen eine den Gewindebolzen umgebende Unterlage (8) als Widerlager abgestützt ist,
- einem in Verlängerung des Stützrohrs (2) angeordneten Zylindergehäuse (1) mit mindestens einem darin in Längsrichtung bewegbaren, gemeinsam mit einer Innenwandung des Zylindergehäuses (1) einen hydraulischen Arbeitsraum begrenzenden Kolben (5, 5A, 5B),
- einer gegenüber dem Kolben (5, 5A, 5B) verdrehbar und durch den Kolben axial mitnehmbar ausgebildeten Wechselbuchse (10), welche zum Verschrauben mit dem Gewindeendabschnitt (A) des Gewindebolzens mit einem Innengewinde (11) versehen ist,
- und einer aus zwei zusammenwirkenden Elementen (51, 52) bestehenden Einrichtung (50) zur Weg- und/oder Positionserfassung,

**dadurch gekennzeichnet, dass** das erste Element (51) dem Zylindergehäuse (1) zugewandt an dem Kolben (5, 5A, 5B), und dass das zweite Element (52) dem Kolben (5, 5A, 5B) zugewandt an dem Zylindergehäuse (1) befestigt ist.

2. Spannvorrichtung nach Anspruch 1, **dadurch gekennzeichnet, dass** das erste Element (51) in Ringform um den Kolben (5, 5A, 5B) herum an diesem angeordnet ist.

3. Spannvorrichtung nach Anspruch 2, **dadurch gekennzeichnet, dass** das erste Element (51) ein Magnetstreifen oder ein magnetisierbarer Abschnitt des Kolbens ist.

4. Spannvorrichtung nach Anspruch 2, **dadurch gekennzeichnet, dass** das erste Element (51) eine Anordnung aus mehreren in der Umfangsfläche des Kolbens (5, 5A, 5B) ausgebildeten Rillen ist.

5. Spannvorrichtung nach einem der vorangehenden Ansprüche, **dadurch gekennzeichnet, dass** das zweite Element (52) in einer Öffnung oder Aussparung des Zylindergehäuses (1) angeordnet ist, die sich nur über einen kleinen Teil des Gesamtumfangs des Zylindergehäuses (1) erstreckt.

6. Spannvorrichtung nach Anspruch 5, **dadurch gekennzeichnet, dass** das zweite Element (52) ein Sensor oder Empfänger ist.

7. Spannvorrichtung nach einem der vorangehenden Ansprüche, **dadurch gekennzeichnet, dass** die Wechselbuchse (10, 10A) frei drehbar in dem Zylindergehäuse (1) angeordnet ist.

8. Spannvorrichtung nach einem der vorangehenden Ansprüche, **dadurch gekennzeichnet, dass** die Wechselbuchse (10) gegenüber dem Kolben (5, 5B) frei drehbar ist, und durch den Kolben (5, 5B) axial mitnehmbar ausgebildet ist.

9. Spannvorrichtung nach Anspruch 8, **dadurch gekennzeichnet, dass** die Wechselbuchse (10) zur axialen Mitnahme durch den Kolben (5B) mit einem auf die Wechselbuchse aufschraubbaren Ring (10A) versehen ist, gegen den der Kolben (5B) oder einer der Kolben anliegt.

**Claims**

1. Tensioning device for stretching a threaded bolt by pulling on the threaded end section (A) thereof, comprising:

   - a support tube (2) which surrounds the threaded bolt and which is supported against a base (8) as an abutment, said base surrounding the threaded bolt,
   - a cylinder housing (1) which is arranged in the extension of the support tube (2), said cylinder housing having at least one piston (5, 5A, 5B) which is movable therein in the longitudinal direction and which, together with an inner wall of the cylinder housing (1), delimits a hydraulic working space,
   - an interchangeable bush (10) which is rotatable relative to the piston (5, 5A, 5B) and which is designed such as to be able to be entrained axially by the piston, said interchangeable bush being provided with an internal thread (11) for screwing to the threaded end section (A) of the threaded bolt,
   - and a means (50) for path and/or position detection, said means consisting of two interacting elements (51, 52),

   **characterized in that** the first element (51) is fastened to the piston (5, 5A, 5B) in a manner facing towards the cylinder housing (1), and **in that** the second element (52) is fastened to the cylinder housing (1) in a manner facing towards the piston (5, 5A, 5B).

2. Tensioning device according to claim 1, **characterized in that** the first element (51) is arranged on the piston (5, 5A, 5B) in a ring shape around the latter.

3. Tensioning device according to claim 2, **characterized in that** the first element (51) is a magnetic strip or a magnetizable section of the piston.

**4.** Tensioning device according to claim 2, **characterized in that** the first element (51) is an arrangement of a plurality of grooves formed in the circumferential surface of the piston (5, 5A, 5B).

**5.** Tensioning device according to any of the preceding claims, **characterized in that** the second element (52) is arranged in an opening or recess of the cylinder housing (1) that extends only over a small portion of the total circumference of the cylinder housing (1).

**6.** Tensioning device according to claim 5, **characterized in that** the second element (52) is a sensor or receiver.

**7.** Tensioning device according to any of the preceding claims, **characterized in that** the interchangeable bush (10, 10A) is arranged in the cylinder housing (1) in such a way as to be freely rotatable.

**8.** Tensioning device according to any of the preceding claims, **characterized in that** the interchangeable bush (10) is freely rotatable relative to the piston (5, 5B) and is designed such as to be able to be entrained axially by the piston (5, 5B).

**9.** Tensioning device according to claim 8, **characterized in that** the interchangeable bush (10), for axial entrainment by the piston (5B), is provided with a ring (10A) which can be screwed onto the interchangeable bush and against which the piston (5B) or one of the pistons bears.

**Revendications**

**1.** Dispositif de serrage pour la dilatation d'une tige filetée par traction sur sa portion d'extrémité filetée (A) avec

- un tube d'appui (2) entourant la tige filetée, qui est appuyé contre une base (8) entourant la tige filetée à la manière d'un contre-palier,
- un boîtier cylindrique (1) disposé dans le prolongement du tube d'appui (2), avec au moins un piston (5, 5A, 5B) mobile à l'intérieur dans la direction longitudinale, délimitant, avec une paroi interne du boîtier cylindrique (1), un espace de travail hydraulique,
- une douille (10), tournant par rapport au piston (5, 5A, 5B) et conçue de façon à pouvoir être entraînée axialement par le piston, qui est munie, pour le vissage avec la portion d'extrémité filetée (A) de la tige filetée, d'un filetage interne (11),
- et un dispositif (50) pour la mesure de course et/ou de position, constitué de deux éléments (51, 52) en interaction,

**caractérisé en ce que** le premier élément (51) est fixé au piston (5, 5A, 5B) de façon à être orienté vers le boîtier cylindrique (1) et **en ce que** le deuxième élément (52) est fixé au boîtier cylindrique (1) de façon à être orienté vers le piston (5, 5A, 5B).

**2.** Dispositif de serrage selon la revendication 1, **caractérisé en ce que** le premier élément (51) est disposé sous une forme annulaire autour du piston (5, 5A, 5B).

**3.** Dispositif de serrage selon la revendication 2, **caractérisé en ce que** le premier élément (51) est une bande magnétique ou une portion magnétisable du piston.

**4.** Dispositif de serrage selon la revendication 2, **caractérisé en ce que** le premier élément (51) est une disposition constituée de plusieurs rainures réalisées dans la surface circonférentielle du piston (5, 5A, 5B).

**5.** Dispositif de serrage selon l'une des revendications précédentes, **caractérisé en ce que** le deuxième élément (52) est disposé dans une ouverture ou un évidement du boîtier cylindrique (1), qui s'étend uniquement sur une petite partie de la circonférence totale du boîtier cylindrique (1).

**6.** Dispositif de serrage selon la revendication 5, **caractérisé en ce que** le deuxième élément (52) est un capteur ou un récepteur.

**7.** Dispositif de serrage selon l'une des revendications précédentes, **caractérisé en ce que** la douille (10, 10A) tourne librement dans le boîtier cylindrique (1).

8. Dispositif de serrage selon l'une des revendications précédentes, **caractérisé en ce que** la douille (10) tourne librement par rapport au piston (5, 5B) et est conçue de façon à pouvoir être entraînée axialement par le piston (5, 5B).

9. Dispositif de serrage selon la revendication 8, **caractérisé en ce que** la douille (10) est munie, pour son entraînement axial par le piston (5B), d'une bague (10A) pouvant être vissée sur la douille et contre laquelle le piston (5B) ou un des pistons s'appuie.

Fig. 1

Fig. 2

**IN DER BESCHREIBUNG AUFGEFÜHRTE DOKUMENTE**

**In der Beschreibung aufgeführte Patentdokumente**

- WO 2013117807 A1